# EUROPEAN PATENT SPECIFICATION

(11) **EP 0 290 067 B1**
(45) Date of publication and mention of the grant of the patent: **30.06.1993**
(21) Application number: 88200735.4
(22) Date of filing: 15.04.1988
(51) Int. Cl.: E21B 43/013, F16L 37/00

(54) **Flowline connector**
Verbinder für eine Flüssigkeitsleitung
Connecteur pour conduite de fluide

(30) Priority: 22.04.1987 GB 8709487
(43) Date of publication of application: 09.11.1988
(73) Proprietor: SHELL INTERNATIONALE RESEARCH MAATSCHAPPIJ B.V., 2596 HR Den Haag (NL)
(72) Inventor: Laursen, Nils Kristian, NL-2596 HR The Hague (NL)

(56) References cited:
- WO-A-84/00791
- GB-A- 2 004 341
- GB-A- 2 058 984
- GB-A- 2 156 467
- GB-A- 2 163 404
- GB-A- 4 076 278
- US-A- 3 419 071
- US-A- 4 265 470

## Description

The invention relates to a flowline connector. More particularly it relates to a flowline connector comprising a pin member which can be snapped into a box member.

The connection of flowlines at difficult accessible locations, such as in deep water near the sea bed, requires that the connection between the flowlines can be made and released in a quick and reliable manner.

Numerous flowline connector systems are known which are intended to provide quick connection and release of the connector parts. U.S. patent No. 3,419,071 discloses a multibore pipe connector including remotely actuated hydraulic means for moving locking fingers radially inward to lock flanges of adjacent pipe sections to each other.

U.S. patent No. 4,265,470 discloses a pin and box type connector of which the connector parts are locked to each other by spring loaded locking fingers which are retained in a contracted position by a locking nut and sleeve assembly surrounding the fingers.

U.S. patent No. 3,987,729 discloses a flowline connector of which the connector parts are locked to each other by a split locking ring instead of locking fingers so as to avoid the high manufacturing cost of the fingers. In the connector design known from this patent the split locking ring is forced into its locking position by moving a tapered sleeve in axial direction over the ring, whereas the locking ring is permitted to expand to its unlocked position by moving the sleeve in an opposite direction. To assist the locking ring to expand to its unlocked position the sleeve is provided with a conical member which is arranged in the open space left between the adjacent ends of the split locking ring, which member forces said ends away from each other when the sleeve is moved in said opposite direction. A disadvantage of this known configuration is the complex assembly of a sleeve and conical member to move the split locking ring between its expanded and retracted position.

GB-A-2156467 discloses a snap type pipe coupling including a pin and a box, a split locking ring arranged in a locking ring retaining groove at the external surface of the pin, which locking ring fits in a normally expanded position thereof in a locking ring receptor groove at the internal surface of the box.

GB-A-2004341 relates to a flowline connector with a pin and a box, a split locking ring which can be moved from a normally expanded position to a contracted position by means of a compression sleeve, and actuator means for actuating the compression sleeve. When the pin is disconnected from the box, the actuator means induce the compression sleeve to retract so as to allow the locking ring to move to the expanded position by the action of the spring force of the locking ring. However, when a tension force is present between the pin and the box, a compressive force is exerted by the pin and the box to the locking ring, which compressive force can prevent the ring from returning to the expanded position thereby preventing disconnection of the pin from the box.

Accordingly it is an object of the invention to provide a snap type flowline connector of which the locking ring can be quickly moved from its expanded locked position into its compressed unlocked position even if a tension force is present between the adjacent connector members.

The flowline connector according to the invention thereto comprises a pin member and a box member, said pin member fitting co-axially within said box member, a split locking ring which is arranged in a locking ring retaining groove at the surface of the pin member, a compression sleeve which at least partly surrounds said locking ring, said compression sleeve being axially slidable relative to the pin member between a first position in which there is a small overlap between the sleeve and ring, and a second position in which there is a larger overlap between the sleeve and ring, and actuator means for inducing said compression sleeve to slide between said first and second position so as to move said locking ring from an expanded to a contracted position and vice versa, characterized in that said locking ring retaining groove is arranged at the external surface of the pin member, said compression sleeve is arranged at the external surface of the pin member, and said locking ring is sized to fit in a normally assumed expanded position thereof in a locking ring receptor groove at the internal surface of the box member.

The key element in the flowline connector according to the invention is the compression sleeve, which is moved over the split locking ring to move said ring from its expanded locked position to its compressed unlocked position. The compression sleeve is able to unlock the split locking ring even if a tension force is present between the connector members, so that always quick disconnection of the members is possible.

The invention will now be explained in more detail with reference to the accompanying drawings, in which:
Fig. 1A is a sectional view of the upper part of the flowline connector according to the invention in a locked position thereof;
Fig. 1B is a sectional view of the lower part of the flowline connector according to the invention in an unlocked position thereof;
Fig. 2 is a cross-sectional view of the stab subs in the connector of Fig. 1A and 1B as seen along broken lines E-E;
Fig. 3 shows the operation of a pull-in device that is used to pull the pin member into the box member, and;
Fig. 4 is a sectional view of the pull-in device of Fig. 3 seen along broken line IV-IV.

In the accompanying drawings similar reference numerals designate similar parts of the connector and associated equipment.

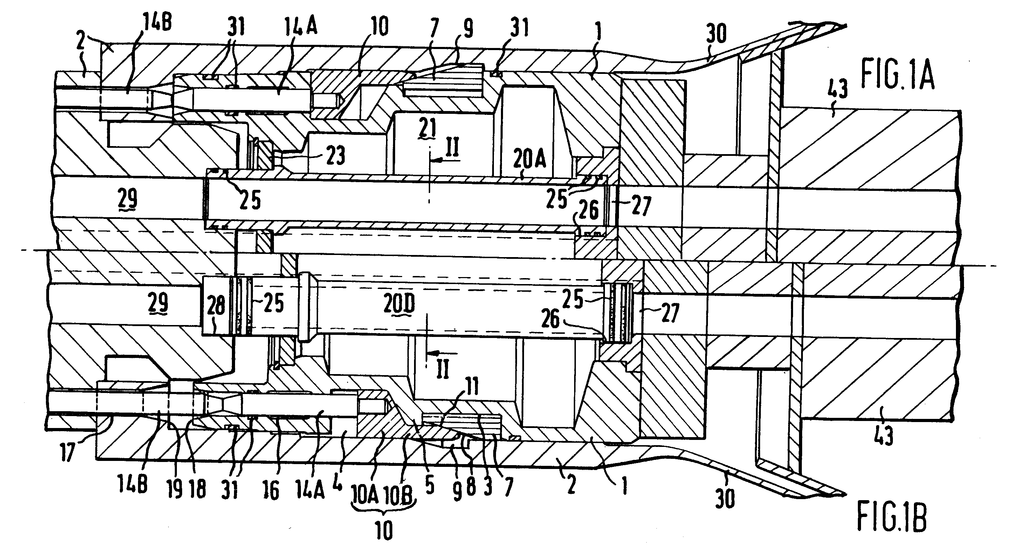

In Fig. 1A and 1B there is shown a snap type flowline connector comprising a pin member 1 which fits co-axially in a box member 2. The pin member 1 comprises a tubular body provided at the external surface thereof with a locking ring retaining groove 3 and a compression sleeve groove 4, which grooves are separated by an annular shoulder 5. In the locking ring retaining groove 3 there is arranged a split locking ring 7 having a tapered outer surface 8. The locking ring 7 is sized to fit, in a normally expanded position thereof (as illustrated in Fig. 1A), in a locking ring receptor groove 9 at the internal surface of the box member 2. A compression sleeve 10 is slidably arranged in the compression sleeve groove 4. The compression sleeve 10 has a cylindrical outer surface and a stepwise increasing internal diameter, such that the sleeve is composed of a small diameter section 10A fitting in the compression ring groove 4, and a large diameter section 10B which slidably surrounds the annular shoulder 5. The large diameter sleeve section 10B comprises an inwardly flared end portion 11 which at least partly surrounds the tapered outer surface 8 of the locking ring.

A plurality of rod assemblies 14A, 14B are provided for moving the compression sleeve 10 between a first position (as illustrated in Fig. 1A) in which there is a small overlap between the sleeve 10 and ring 7, and a second position (as illustrated in Fig. 1B) in which there is a larger overlap between the sleeve 10 and ring 7.

Each rod assembly 14A, 14B comprises a first rod 14A which is screwed to the compression sleeve 10 and a second rod 14B which is mounted on a hydraulically actuated piston (not shown) in the box member 2. Each first rod 14A is slidably arranged in an axial opening 16 in the pin member 1 and each second rod 14B is slidably arranged in a corresponding axial opening 17 in the box member 2. The openings 16 and 17 are axially aligned and pass through abutting end faces 18 and 19 of the pin and box member. By actuating the hydraulic pistons the rod assemblies 14A, 14B can be moved synchroneously from the contracted position shown in Fig. 1A to the extended position shown in Fig. 1B thereby moving the compression sleeve to move from its first to its second position and urging the split locking ring to be contracted to its unlocked position.

The movement of the compression sleeve in opposite direction, i.e. from its second to its first position, is initiated by the use of Belle Ville spring washers (not shown), which pull the compression sleeve 10 away from the locking ring 7.

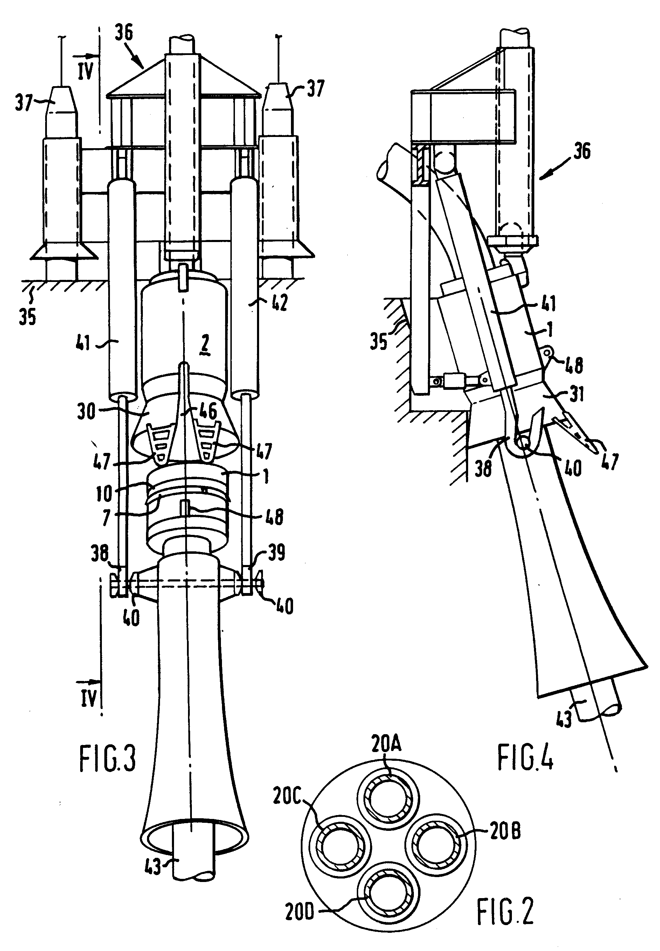

The pin member 1 carries four stab subs 20A-D (see also Fig. 2). The stab subs 20A-D are arranged in a central opening 21 within the pin member 1 and they are supported in a substantially longitudinal orientation by a perforated support disk 23 which is cross-axially arranged in said opening 21 at a location close to the end face 18 of the pin member 2. Each stab sub is at one end thereof sealingly fitted in an enlarged end portion 26 of a fluid passageway 27 in the pin member. Each stab sub is at the other end thereof sized to be sealingly stabbed into an enlarged end portion 28 of a corresponding fluid passageway 29 in the box member 2. Sealing between the outer surface of the stab subs 20A-D and the internal surface of the enlarged end portions 26, 28 of the fluid passageways 27, 29 in the pin and box member is provided by a plurality of flexible seal-rings 25. The arrangement of the stab subs 20A-D ensures that a reliable and leakage free connection can be made between the corresponding passageways in the pin and box member even in case of a slight misalignment between the members.

As illustrated in Fig. 1A and B the box member 2 comprises a guide funnel 30 for guiding the pin member 1 in a co-axial position relative to the box member 2 during the pull-in procedure. In order to enable easy connection and release of the connector members the box member 2 has an internal diameter which increases stepwise in a direction from the end face 19 to the guide funnel 30. The pin member has an external diameter which stepwise increases in a corresponding manner in said direction.

In order to avoid the entrance of solid debis in the area of the locking ring 7 and other moving parts a series of sealing rings 31 are arranged at the external surface of the pin member and within the axial openings 17 housing the rods 14A.

The connector operates as follows. When the pin member 1 is pulled into the box member 2 the second rods 14B are in the extended position (as illustrated in Fig. 1B) and push the compression sleeve 10 in the second position thereof. Hence the locking ring 7 is pushed in the contracted position thereof. When the pin member 1 has reached the position shown in Fig. 1A the compression sleeve is moved towards the first position thereof by contracting the rod assemblies 14A, 14B thereby enabling the locking ring 7 to snap into the locking ring receptor groove 9 at the internal surface of the box member.

If disconnection of the pin member 1 from the box member 2 is required the rod assemblies 14A, 14B are actuated by means of the hydraulically actuated pistons (not shown) to move the compression sleeve 10 from the first position (shown in Fig. 1A) to the second position thereof (shown in Fig. 1B). Said movement of the compression sleeve 10 over the tapered surface 8 of the split locking ring 7 forces the locking ring 7 to contract thereby releasing the locking ring 7 from the locking ring receptor groove 9 at the internal surface of the box member 2. Subsequently the axial force exerted by the rods 14a to the compression sleeve 10 is transferred via the annular shoulder 5 to the pin member 1 thereby pushing the pin member 1 away from the box member 2.

The assembly of rods 14A, B and compression sleeve 10 thus provide a simple and reliable actuator mechanism which is able to force the split locking ring into its contracted, unlocked, position and to subsequently push the pin member 1 away from the box member 2.

As illustrated in Figs. 3 and 4 the box member 1 may be arranged on a submerged or floating structure 35, and the pin member 1 may be located at the end of a multibore flexible conduit 43. In that situation the procedure of pulling the pin member 1 into the box member 2 may be carried out by a remotely operated pull-in device 36 which is landed on a pair of guide posts 37 which are arranged on the structure 35 adjacent to the box member 2.

The pull-in device comprises a pair of hooks 38,39 cooperating with a pair of studs 40 mounted latidunally on the pin member 1. The hooks 38, 39 are mounted on a pair of substantially parallel hydraulic pistons 41, 42 which can be retracted synchroneously in order to pull the pin member 1 in a substantially axially aligned position into the box member 2.

The guide funnel 30 comprises an axial slit 46 cooperating with a pulling eye 48 mounted on the pin member 1 and in the prolongation of the side walls of the slit 46 a pair of guide members 47 are provided in order to induce the pin member 1 to slide in a predetermined orientation into the box member 2.

Fig. 4 shows the pull-in device 36 after it has been employed to pull the pin member 1 into the box member 2. At the end of the coupling procedure the pull-in device 36 may be retrieved from the guide posts 37 after release of the hooks 38, 39 from the studs 40. The device 36 may be reinstalled on the guide posts 37 if disconnection of the connector members is required. During the disconnection procedure the hooks 38, 39 may pull the pin member 1 into the box member 2 while the rod assemblies push the compression sleeve 10 over the split locking ring 7 so as to enable easy release of the locking ring 7 from the locking ring receptor groove 9. A detailed description of the operation and procedures for retrieval and reinstallation of the pull-in device shown in Fig. 3 and 4 has been disclosed in Applicant's British patent application No. 8520704 (publication No. 2,163,404).

It will be understood that instead of using the pull-in device shown in Fig. 3 and 4 other remotely operated pull-in devices may be used as well.

It will further be understood that the flowline connector according to the invention may be used to couple any type of single bore or multibore flowlines at both offshore or onshore locations.

## Claims

1. A snap type flowline connector comprising:
a pin member (1) and a box member (2), said pin member (1) fitting co-axially within said box member (2), a split locking ring (7) which is arranged in a locking ring retaining groove (3) at the surface of the pin member (1), a compression sleeve (10) which at least partly surrounds said locking ring (7), said compression sleeve (10) being axially slidable relative to the pin member (1) between a first position in which there is a small overlap between the sleeve (10) and ring (7), and a second position in which there is a larger overlap between the sleeve (10) and ring (7), and actuator means (14A, 14B) for inducing said compression sleeve (10) to slide between said first and second position so as to move said locking ring (7) from an expanded to a contracted position and vice versa, characterized in that said locking ring retaining groove (3) is arranged at the external surface of the pin member (1), said compression sleeve (10) is arranged at the external surface of the pin member (1), and said locking ring (7) is sized to fit in a normally assumed expanded position thereof in a locking ring receptor groove (9) at the internal surface of the box member (2).

2. The connector of claim 1, wherein the compression sleeve (10) has a stepwise increasing internal diameter and comprises a small internal diameter section (10A) which is slidably arranged in a compression sleeve groove (4) at the external surface of the pin member (1) and a large internal diameter section (10B) with a flared end portion (11), said end portion (11) at least partly surrounding the locking ring (7), and said large internal diameter portion (10B) at least partly surrounding an annular shoulder (5) which separates the locking ring retaining groove (3) and the compression sleeve groove (4).

3. The connector of claim 2, further comprising means for orienting the pin member (1) in a predetermined orientation within the box member (2).

4. The connector of claim 3, wherein said actuator means comprise a plurality of rod assemblies (14A,14B) extending through axially aligned openings (16,17) passing through abutting end faces (18,19) of the pin (1) and box member (2), each rod assembly (14A,14B) comprising a first rod (14A) which is rigidly secured to the compression sleeve (10) and passes through a longitudinal opening (16) extending between said compression sleeve retaining groove (4) and said end face (18) of the pin member (1).

5. The connector of claim 3, wherein the pin (1) and box member (2) each comprise a plurality of interconnectable fluid passageways (27,29).

6. The connector of claim 5, further comprising a plurality of stab subs (20A-D) carried by the pin member (1), each stab sub (20A-D) being fitted at one end thereof into an enlarged end portion (26) of a fluid passageway (27) in the pin member (1) and being sized to be sealingly stabbed into an enlarged end portion (28) of a corresponding fluid passageway (29) in the box member (2).

7. The connector of claim 6, wherein the stab subs (20A-D) are supported in a substantially longitudinal orientation inside a central opening (21) in the pin member (1) by means of a perforated support disk (23) which is cross-axially arranged in said opening (21) at a location close to the end face (18) of the pin member (1).

8. The connector of claim 1, wherein the external surface of the pin member (1) has a diameter which increases stepwise in a longitudinal direction away from the end face (18) thereof and the internal surface of the box member (2) has a diameter which increases in a corresponding manner in said direction.

9. The connector of claim 1, wherein a pull-in device (36) is retrievably mounted on the box member (2), said device (36) being provided with a pair of hydraulically operated hooks (38,39) cooperating with a pair of studs (40) protruding in a cross-axial direction from the pin member (1).

## Patentansprüche

1. Ein Verbinder von Flußleitungen vom Einrasttyp, der aufweist:
ein Stiftglied (1) und ein Kastenglied (2), wobei das Stiftglied (1) koaxial in dem Kastenglied (2) anliegt, einen Spaltsperring (7), der in einer den Sperring aufnehmenden Nut (3) an der Oberfläche des Stiftgliedes (1) angeordnet ist, eine Kompressionsmuffe (10), die wenigstens teilweise den Sperring (7) umgibt, wobei die Kompressionsmuffe (10) relativ zu dem Stiftglied (1) zwischen einer ersten Position, in der ein kleiner Überlapp zwischen der Muffe (10) und dem Ring (7) vorhanden ist, und einer zweiten Position, in der ein größerer Überlapp zwischen der Muffe (10) und dem Ring (7) vorhanden ist, axial gleitfähig angeordnet ist, und eine Betätigungseinrichtung (14A, 14B) zum Bewirken, daß die Kompressionsmuffe (10) zwischen der ersten und zweiten Stellung gleitet, um den Sperring (7) von einer ausgedehnten in eine eingezogene Stellung und umgekehrt zu bewegen,
dadurch **gekennzeichnet,** daß die den Sperring aufnehmende Nut (3) an der Außenfläche des Stiftgliedes (1) angeordnet ist, daß die Kompressionsmuffe (10) an der Außenfläche des Stiftgliedes (1) angeordnet ist, und daß der Sperrring (7) so dimensioniert ist, daß er in einer normalerweise angenommenen ausgedehnten Stellung in einer Sperringrezeptornut (9) an der Innenfläche des Kastengliedes (2) anliegt.

2. Verbinder nach Anspruch 1, wobei die Kompressionsmuffe (10) einen schrittweise ansteigenden Innendurchmesser besitzt und einen Bereich (10A) mit kleinem Innendurchmesser, der gleitfähig in einer Kompressionsmuffennut (4) der Außenfläche des Stiftgliedes (1) angeordnet ist, und einen Bereich (10B) mit großem Innendurchmesser mit einem konisch erweiterten Endbereich (11) aufweist, wobei der Endbereich (11) zumindest teilweise den Sperring (7) umgibt, und wobei der Bereich (10B) mit großem Innendurchmesser wenigstens teilweise eine ringförmige Schulter (5) umgibt, die die Sperring aufnehmende Nut (3) und die Kompressionsmuffennut (4) trennt.

3. Verbinder nach Anspruch 2, das weiterhin eine Einrichtung zum Orientieren des Stiftgliedes (1) in einer vorbestimmten Orientierung in dem Kastenglied (2) aufweist.

4. Verbinder nach Anspruch 3, wobei die Betätigungseinrichtung eine Vielzahl von Stabanordnungen (14A, 14B) aufweist, die sich durch axial ausgerichtete Öffnungen (16, 17) erstrekken, die durch aneinanderstoßende Endflächen (18, 19) des Stiftgliedes (1) und des Kastengliedes (2) hindurchführen, wobei jede Stabanordnung (14A, 14B) einen ersten Stab (14A) aufweist, der mit der Kompressionsmuffe (10) starr verbunden ist und durch eine longitudinale Öffnung (16) führt, die sich zwischen der Kompressionsmuffen aufnehmenden Nut (4) und der Endfläche (18) des Stiftgliedes (1) erstreckt.

5. Verbinder nach Anspruch 3, wobei das Stiftglied (1) und das Kastenglied (2) jeweils eine Vielzahl von miteinander verbindbaren Fluiddurchlässen (27, 29) aufweisen.

6. Verbinder nach Anspruch 5, das weiterhin eine Vielzahl von eingebrachten Unterrohren, sogenannten stab subs (20A-D) aufweist, die von dem Stiftglied (1) getragen werden, wobei jedes stab sub (20A-D) an einem Ende in einen vergrößerten Endbereich (26) eines Fluiddurchlasses (27) in dem Stiftglied (1) angebracht ist und ausgebildet ist, um dichtend in einen vergrößerten Endbereich (28) eines entsprechenden Fluiddurchlasses (29) in dem Kastenglied (2) eingebracht zu werden.

7. Verbinder nach Anspruch 6, wobei die stab subs (20A-D) in einer im wesentlichen longitudinalen Orientierung in einer Zentralöffnung (21) in dem Stiftglied (1) mittels einer gelochten Trägerscheibe (23) gehalten sind, die in der Öffnung (21) an einer Stelle nahe der Endfläche (18) des Stiftglieds (1) senkrecht zur Achse angeordnet ist.

8. Verbinder nach Anspruch 1, wobei die Außenfläche des Stiftglieds (1) einen Durchmesser hat, der schrittweise in einer longitudinalen Richtung weg von der Endfläche (18) ansteigt und die Innenfläche des Kastenglieds (2) einen Durchmesser hat, der in entsprechender Weise in dieser Richtung ansteigt.

9. Verbinder nach Anspruch 1, wobei eine Einzieheinrichtung (36) wiedergewinnbar an dem Kastenglied (2) angebracht ist, wobei die Einrichtung (36) mit einem Paar von hydraulisch betriebenen Haken (38, 39) versehen ist, die mit einem Paar von Bolzen (40) zusammenwirken, die in Richtung senkrecht zur Achse von dem Stiftglied (1) vorstehen.

## Revendications

1. Connecteur de conduite de fluide du type à encliquetage comprenant : un élément de broche (1) et un élément de boîtier (2), ledit élément de broche (1) s'emboîtant coaxialement à l'intérieur dudit élément de boîtier (2), une bague de verrouillage fendue (7) gui est agencée dans une gorge de retenue de bague de verrouillage (3) au niveau de la surface de l'élément de broche (1), un manchon de compression (10) qui entoure au moins partiellement ladite bague de verrouillage (7), ledit manchon de compression (10) pouvant coulisser axialement par rapport à l'élément de broche (1) entre une première position dans laquelle il y a un faible chevauchement entre le manchon (10) et la bague (7) et une seconde position dans laquelle il y a un chevauchement plus important entre le manchon (10) et la bague (7), et un moyen d'actionneur (14A, 14B) pour forcer ledit manchon de compression (10) à coulisser entre lesdites première et seconde positions de manière à déplacer ladite bague de verrouillage (7) d'une position dilatée à une position contractée et vice-versa, caractérisé en ce que ladite gorge de retenue de bague de verrouillage (3) est agencée au niveau de la surface externe de l'élément de broche (1), ledit manchon de compression (10) est agencé au niveau de la surface externe de l'élément de broche (1) et ladite bague de verrouillage (7) est dimensionnée de manière à s'emboîter, quand elle est dans une position dilatée prise normalement, dans une gorge de réception de bague de verrouillage (9) située au niveau de la surface interne de l'élément de boîtier (2).

2. Connecteur selon la revendication 1, dans lequel le manchon de compression (10) présente un diamètre interne augmentant de façon étagée et comprend une section de diamètre interne faible (10A) qui est agencée de façon coulissante dans une gorge de manchon de compression (4) au niveau de la surface externe de l'élément de broche (1) et une section de diamètre interne important (10B) munie d'une partie d'extrémité inclinée (11), ladite partie d'extrémité (11) entourant au moins partiellement la bague de verrouillage (7) et ladite partie de diamètre interne important (10B) entourant au moins partiellement un épaulement annulaire (5) qui sépare la gorge de retenue de bague de verrouillage (3) de la gorge de manchon de compression (4).

3. Connecteur selon la revendication 2, comprenant en outre un moyen pour orienter l'élément de broche (1) selon une orientation prédéterminée à l'intérieur de l'élément de boîtier (2).

4. Connecteur selon la revendication 3, dans lequel ledit moyen actionneur comprend une pluralité d'assemblages de tiges (14A, 14B) s'étendant au travers d'ouvertures alignées axialement (16, 17) traversant des faces d'extrémité de butée (18, 19) de la broche (1) et de l'élément de boîtier (2), chaque assemblage de tiges (14A, 14B) comprenant une première tige (14A) qui est fixée de façon rigide au manchon de compression (10) et qui traverse une ouverture longitudinale (16) s'étendant entre ladite gorge de retenue de manchon de compression (4) et ladite face d'extrémité (18) de l'élément de broche (1).

5. Connecteur selon la revendication 3, dans lequel la broche (1) et l'élément de boîtier (2) comprennent chacun une pluralité de passages de fluide interconnectables (27, 29).

6. Connecteur selon la revendication 5, comprenant en outre une pluralité de raccords (20A-D) supportés par l'élément de broche (1), chaque raccord (20A-D) étant emboîté au niveau d'une de ses extrémités dans une partie d'extrémité agrandie (26) d'un passage de fluide (27) ménagé dans l'élément de broche (1) et étant dimensionné de manière à être raccordé de façon étanche dans une partie d'extrémité agrandie (28) d'un passage de fluide correspondant (29) ménagé dans l'élément de boîtier (2).

7. Connecteur selon la revendication 6, dans lequel les raccords (20A-D) sont supportés selon une orientation sensiblement longitudinale à l'intérieur d'une ouverture centrale (21) ménagée dans l'élément de broche (1) au moyen d'un disque de support perforé (23) qui est agencé axialement dans la section de ladite ouverture (21) en un emplacement proche de la face d'extrémité (18) de l'élément de broche (1).

8. Connecteur selon la revendication 1, dans lequel la surface externe de l'élément de broche (1) présente un diamètre qui augmente de façon étagée suivant une direction longitudinale lorsque l'on s'éloigne de la face d'extrémité (18) de celui-ci et la surface interne de l'élément de boîtier (2) présente un diamètre qui augmente d'une façon correspondante suivant ladite direction.

9. Connecteur selon la revendication 1, dans lequel un dispositif de traction (36) est monté sur l'élément de boîtier (2) de façon à pouvoir être récupéré, ledit dispositif (36) étant muni d'une paire de crochets actionnés hydrauliquement (38, 39) coopérant avec une paire de tiges filetées (40) se projetant suivant une direction axiale transversale depuis l'élément de broche (1).
